Europäisches Patentamt

European Patent Office

Office européen des brevets

(11) Publication number: **0 034 487**
**B1**

(12) **EUROPEAN PATENT SPECIFICATION**

(45) Date of publication of patent specification: **12.06.85**

(21) Application number: **81300611.1**

(22) Date of filing: **13.02.81**

(51) Int. Cl.⁴: **G 01 F 23/30, F 16 N 19/00, F 04 C 29/10**

(54) Oil level and flow sensing apparatus for vacuum pump service.

(30) Priority: **19.02.80 US 122558**

(43) Date of publication of application:
**26.08.81 Bulletin 81/34**

(45) Publication of the grant of the patent:
**12.06.85 Bulletin 85/24**

(84) Designated Contracting States:
**DE GB**

(56) References cited:
**CH-A- 486 061**
**DE-A-2 150 675**
**FR-E- 25 547**
**GB-A-1 364 854**
**US-A-1 677 494**
**US-A-2 706 410**
**US-A-3 876 037**

(73) Proprietor: **GENERAL SIGNAL CORPORATION**
**PO Box 10010 High Ridge Park**
**Stamford Connecticut 06904 (US)**

(72) Inventor: **Dobrowolski, Zbigniew Christopher**
**153 Pine Grove Street**
**Needham Massachusetts (US)**
Inventor: **Morrison, Thomas J.**
**P.O. Box 514**
**Mashpee Massachusetts (US)**

(74) Representative: **Baillie, Iain Cameron et al**
**c/o Ladas & Parry Isartorplatz 5**
**D-8000 München 2 (DE)**

Courier Press, Leamington Spa, England.

# Description

This invention relates to an oil level and flow sensing apparatus comprising a reservoir for holding oil used for lubricating a vacuum pump.

Mechanical vacuum pumps perform a variety of functions in vacuum systems, the primary function being that of removing atmospheric air or other gas from the system to some acceptable operating vacuum pressure. This function is commonly performed by means of oil-sealed gas compressors in which the inlet pressure is that of the system and the outlet pressure is that of the atmosphere. Of the many possible types of oil-sealed mechanical pumps, one of the most successful are oil-sealed rotary pumps of positive displacement, i.e., pumps which isolate at each revolution a specific volume of gas at the pressure in the system, compress the sample, and exhaust it to atmospheric pressure. Illustrative of such types of pumps is a rotating plunger or piston type of pump in which an eccentrically mounted cam rotates about a shaft and guides the pump piston. The piston has a hollow extension (slot) that moves through a slide pin. The hollow extension has ports which form an inlet valve with the slide pin. Gas from the system enters the pump through an inlet and from there passes through the hollow slide valve and into the space being created between the piston and the cylinder wall. Oil from a reservoir is ingested into the pump to seal the piston relative to the cylinder. As the piston rotates, the intake space increases and more gas is drawn in while at the same time gas taken in on the previous revolution is trapped on the compression side of the piston between the piston and the slide. There the gas is compressed and forced out through a discharge valve together with a small amount of oil, and from there the gas vents into an oil separator where oil is separated from the gas. The gas is discharged into the atmosphere and the oil drains back into the reservoir. An example of such a type of pump is the KD-30 pump manufactured by Kinney Vacuum Company, a unit of General Signal Corporation.

The proper operation and longevity of such pumps depends upon supplying the rotating piston with a sufficient flow of oil. The oil supplied to the rotating piston performs two functions: it lubricates the cylinder walls, pistons, slides, bearings and pins, as well as seals the inside of the cylinder against the back flow of gas by means of a film of oil which fills the close running clearances between the piston and the cylinder walls. The cylindrical part of the piston almost touches the pump's cylinder at a line along the length of the piston and as the piston continues to rotate, oil builds up ahead of this line and seals the space between the piston and cylinder wall. The excess oil is discharged with the gas and is returned to the oil reservoir.

Operators of vacuum systems frequently find it desirable to monitor the operation of their vacuum pump. In particular, operators want some means for monitoring the oil level in the pump reservoir as well as the oil flow to the pump in order to ensure the proper and continued operation of the system. Such monitoring means may well be critical for pumps that are located at remote locations where, for example, hazardous gases are being removed from a system. Under such circumstances, an oil failure could not only seriously damage the pump and possibly also the entire system, but also could prove hazardous to the operator and to the general public.

Prior attempts to provide such a vacuum pump monitoring means have resulted in, at best, only partial success or high expense, or both. For example, one approach provides an oil level signal detector in the oil storage reservoir of the vacuum pump for indicating the level of oil by means of a liquid level switch, such as a float switch, magnetic, optical, or capacitive device. The disadvantage of such an indicator is that it does not provide a warning indication when the reservoir contains ample oil and yet the oil flow from the reservoir to the pump is restricted, for example by a blockage in a connecting line. Hence, such monitors, are at best only partial solutions.

Other attempts have included the use of more complicated indirect sensing of oil supply by incorporating a flow indicator into the main oil supply line leading from the reservoir to the pump. Such devices rely upon sensitive magnetic reed switches for sensing the usually low rates of oil flow. A disadvantage of such a system is that it requires auxiliary equipment for overriding false indications of zero flow. Such false indications of zero flow can occur when the pump is initially started and little or no oil is drawn from the reservoir. Another false indication can also occur at pump startup when oil in the main supply line may be forced to flow temporarily in the opposite direction in the oil supply line, i.e. towards the reservoir. Hence, such flow indicators usually require additional auxiliary equipment to sense these false readings and override them.

Still another attempt provides a positive pressure in the oil supply line in order to force the oil from the reservoir to the pump, rather than merely relying upon the suction created by the pump itself. Such systems require a pump placed in the main oil supply line as well as a pressure switch for sensing the pressure (or absence thereof) in the supply line.

Despite all of the above mentioned proposed solutions, there remains an unfulfilled and long felt need for a relatively simple, inexpensive, and easily installed oil level and flow sensor for vacuum pumps to sense the oil level in the vacuum pump reservoir as well as the oil flow in the main oil supply line. In particular, a sensor is needed that will distinguish between an abnormal flow condition and the variety of normal flow and pressure conditions which occur in the main oil supply line.

CH—A—486 061, DE—A—2 150 675 and GB—A—1 364 854 are all concerned with prior art sensing systems.

CH—A—486 061 shows a float valve located in a reservoir at atmospheric pressure and including a valve seat coupled to the reservoir end of the oil supply line and a buoyant valve element positionally dependent on the surface level of the oil and for sealingly engaging the valve seat when the oil surface falls below a predetermined level whereby a depression is created in the oil supply line.

DE—A—2 150 675 discloses a depression sensing means connected to the oil supply line for sensing the presence of a predetermined depression in the oil supply line thereby indicating an insufficient oil flow for safe operation.

GB—A—1 364 854 discloses an oil level and flow sensing apparatus comprising a reservoir for holding oil used for lubricating a vacuum pump, a vacuum pump including an oil passage port through which the vacuum pump draws or expels oil during operation, an oil supply line having one end connected to the reservoir and the other end connected to the oil passage port for carrying oil between the reservoir and the vacuum pump in either direction, at variable rates of flow and at variable levels of pressure during operation of the vacuum pump.

The invention provides such an arrangement which is characterised in that the reservoir is normally maintained at atmospheric pressure and a float valve is located in the reservoir and includes a valve seat coupled to the reservoir end of the oil supply line and a buoyant valve element positionally dependent on the surface level of the oil and for sealingly engaging the valve seat when the oil surface falls below a predetermined level whereby a vacuum is created in the oil supply line, and in that a vacuum sensor is connected to said oil supply line, for sensing the presence of a predetermined vacuum in the oil supply line thereby indicating an insufficient oil flow for safe operation.

Embodiments of the invention are set out in claims 2 to 4.

Hereinafter described is an exemplary embodiment of the invention which comprises a reservoir normally maintained at or above atmospheric pressure for holding oil that is used for sealing and lubricating a vacuum pump. The vacuum pump evacuates gas or air from a system and includes an oil passage port through which the vacuum pump draws or expels oil depending upon the operating condition of the pump. The main oil supply line has one end connected to the reservoir and the other end connected to an oil passage port of the pump for carrying oil between the reservoir and the vacuum pump. The oil in the oil supply line is subject to variable rates of flow and variable levels of pressure depending upon the operating condition of the vacuum pump. A float valve is located in the reservoir and includes a valve seat coupled to the reservoir end of the oil supply line. A buoyant valve element normally floats at a level dependent upon the surface level of the oil and sealingly engages the valve seat when the oil surface level falls below a predetermined level whereby a vacuum is created in the oil supply line that is indicative of insufficient oil flow. A vacuum sensing means such as a vacuum sensing switch is located in the oil supply line for sensing the presence of the predetermined vacuum in that line, thereby indicating either (1) an insufficient oil level in the reservoir, or (2) a restriction in the flow from the reservoir to the pump resulting in an insufficient amount of flow for safe operation of the pump. There are suitable means responsive to the vacuum sensing means for signalling in the presence of the predetermined, unsafe vacuum condition thereby indicating to an operator of the system that the oil flow is insufficient for continued, safe operation.

An advantageous feature of the invention is the selection of the main oil supply line as a candidate for the flow monitoring means. This feature includes the use of a vacuum sensing switch in a line which is normally at or below atmospheric pressure. Hence, it is not merely the presence of a vacuum in the oil supply line which triggers an alarm, because the oil supply line may normally operate at 67,500 Pa (two-thirds of atmospheric pressure). Rather, it is the sensing of an excessive vacuum which characterises the present invention.

In order that the invention might be clearly understood, a preferred embodiment thereof will hereinafter be described by way of example only with reference to the accompanying drawings wherein:—

Figure 1 is a perspective view of a vacuum pump including the oil level and flow sensing apparatus of the invention;

Figure 2 is a cross-sectional view of the vacuum pump of Figure 1;

Figure 3 is a perspective view of the float valve of Figure 1;

Figure 4 is an elevational view of the float valve in its open position; and

Figure 5 is an elevational view of the float valve in its sealed or closed position.

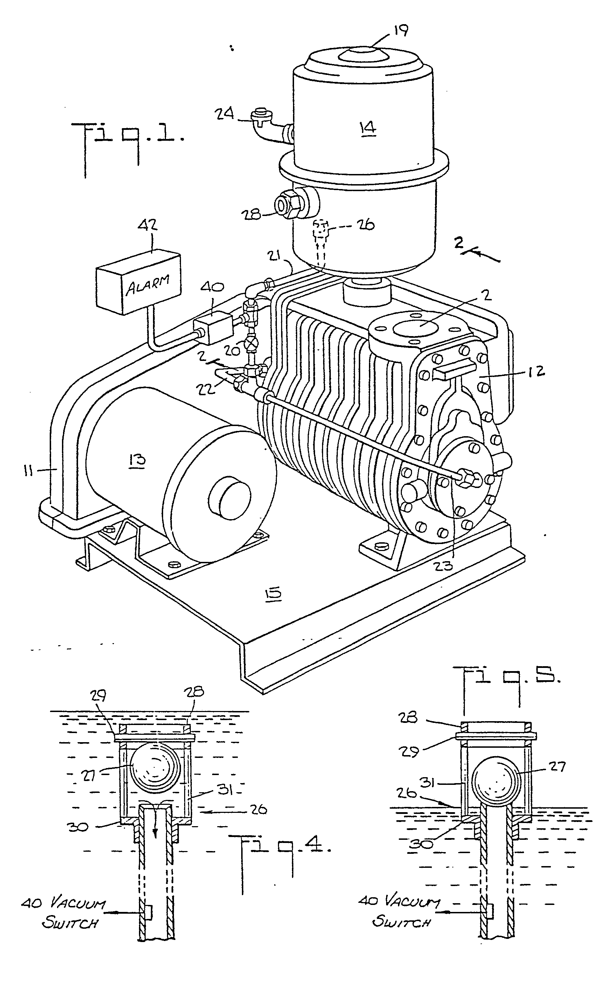

Turning now to Figure 1, there is generally shown a single stage vacuum pump 12 driven by a motor 13. The particular vacuum pump illustrated in Figure 1 is a model KD-30 Vacuum Pump manufactured by Kinney Vacuum Company, a unit of General Signal Corporation. The pump 12 and motor 13 are fixedly mounted on a base frame 15. The pump is driven by a belt (not shown) which is contained inside belt cover 11. Pump 12 has an inlet 2 through which gas from the system to be evacuated is drawn. The evacuated gases are expelled through an outlet 19 that sits on top of an oil separator and reservoir 14. The reservoir 14 has a sight glass 28 through which an operator may observe the level of oil inside the reservoir 14. A fill port 24 is provided for adding oil if needed. Main oil supply line 21 carries oil from reservoir 14 past oil supply valve 20 (manual or automatic) to the oil supply branches 22, 23 which in turn are connected to oil supply ports (not shown) at opposite ends of pump 12.

The invention provides for a float valve 26 disposed inside the oil reservoir 14, together with a vacuum sensing switch 40 for sensing a predetermined vacuum pressure in the main oil supply line 21. An alarm 42 is provided for signalling when the vacuum sensing switch 40 detects the predetermined vacuum.

The operation of vacuum pumps in general, and of the particular rotary piston type pump 12 illustrated in Figure 1 is well known. Nevertheless, the following description is provided of the operation of pump 12 in order to enable a person skilled in the art to appreciate how the invention functions in the environment of a particular type of vacuum pump.

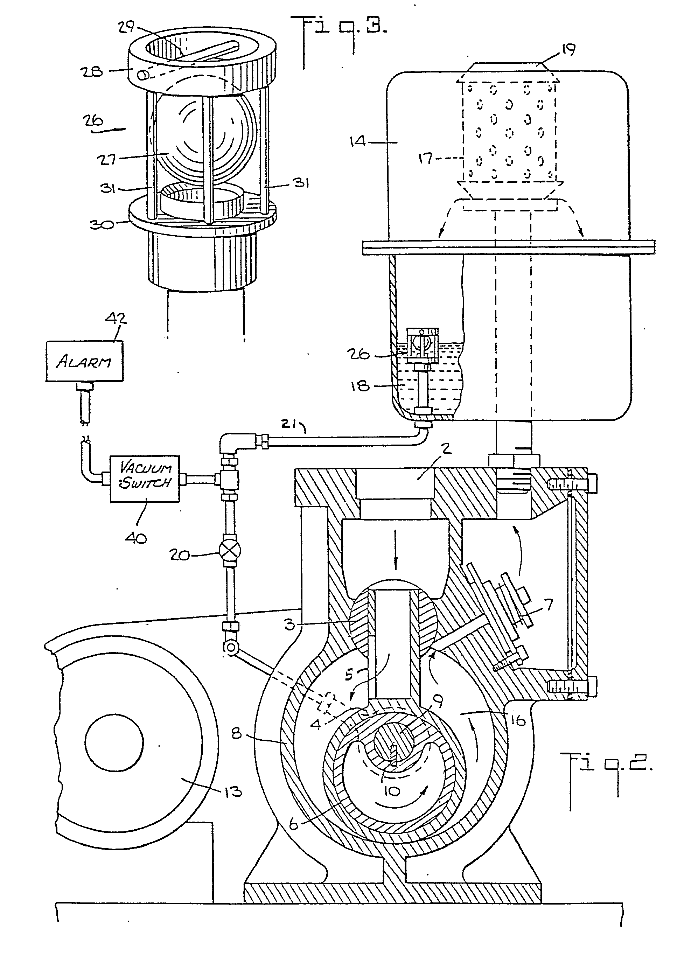

The operating cycle is best described with reference to Figure 2. Gas from a system to be evacuated enters the pump 12 through the inlet 2 and from there it passes through the hollow portion of piston 4 and out the slide port 5 into a space being created between the piston 4 and the wall of cylinder 8. Piston 4 encloses a cam 6 which is keyed to a drive shaft 9 via a key 10 in such a manner as to cause the piston 4 to travel an eccentric path closely adjacent to the inner surface of cylinder 8. As piston 4 travels along its path, the volume in communication with slide port 5 increases and more gas is drawn in. At the same time, gas taken in and trapped on a previous revolution is on the opposite side of the piston 4 and slide pin 3. There the gas is compressed and forced out of chamber 16 through a discharge valve 7 (along with a small amount of oil) and then into the oil separator and reservoir 14 where the oil is separated from the gas. The gas is discharged to the atmosphere through an outlet 19 and the oil 18 drains back into the reservoir 14. A filter 17 is optionally provided to remove visible fumes from the discharge gas.

The oil 18 lubricates the moving parts of pump 12 as well as provides a seal for the compressed gas. The oil 18 flows through the pump 12 by means of differential pressure between atmosphere and the pump inlet 2. Oil 18 is drawn into the pump 12 at each end through suitable oil ports (not shown). The walls of the cylinder 8, piston 4, and slide pin 3 are lubricated and sealed against the backflow of gas by a film of oil which fills close running clearances between the aforementioned parts. The cylindrical part of piston 4 almost touches the pump cylinder 8 at a line along the length of the piston. As the piston 4 continues to rotate, oil builds up ahead of this line and seals the space between the piston 4 and the wall of cylinder 8. Excess oil is discharged with the gas through discharge valve 7 and is returned to the oil reservoir 14. At low pressures gas may dissolve in the oil and the solution is discharged on the compression stroke.

As stated above, oil from reservoir 14 generally flows through main oil supply line 21 and into the oil supply branches 22, 23 for passage through oil

ports (not shown) at either end of the piston 4. However, even under normal operating conditions, the directions, rate of flow, and pressure (head) of oil in the main oil supply line 21 is erratic. In particular, the oil flow may temporarily reverse its direction and flow from the pump 12 through the main oil supply line 21 into the reservoir 14. In addition, the rate of oil flow is dependent upon the vacuum developed by the pump. Accordingly, the oil flow rate varies from no flow near atmospheric pressure to full flow at or about 67,500 Pa (2/3 of an atmosphere) or lower. Moreover, different pumps may have different oil port sizes at the ends of pump 12 so that the pressure in the oil supply line 21 may be at or near atmospheric pressure even when the pump 12 is under vacuum. Furthermore, the main oil supply line 21 may be partly or fully under vacuum depending upon the presence or absence of valves or other porting restrictions between the oil reservoir 14 and the oil ports to the pump 12.

The subject invention overcomes the disadvantages of the prior art, is relatively inexpensive, has few operating parts, and provides two desirable functions inasmuch as it monitors oil loss (level) as well as the rate of oil flow. The invention includes, in combination with pump 12, a float valve 26, that is coupled to the reservoir end of main oil supply line 21. A vacuum sensing switch 40 is coupled to the oil supply line 21 for sensing a predetermined vacuum in the line. A vacuum in line 21 may be caused by either the closure of float valve 26, or a restriction in line 21 upstream of the vacuum sensing means 40. Any suitable means, such as an alarm 42, can be actuated by the vacuum sensing switch 40 in order to indicate to an operator that the oil flow has fallen below a predetermined safe level.

With reference to Figure 3, there is shown a perspective view of the float valve. It includes a buoyant float element 27, such as a hollow steel ball, which is contained inside a housing comprising an upper collar 28, a diametrical crossing retaining pin 29 extending across the diameter of collar 28, a plurality of retaining bars 31 extending downwardly from collar 28 and fixedly connected to a base 30 which is attached to and surrounds the reservoir end of main oil supply line 21.

The float valve 26 is responsive to the level of oil in the reservoir 14. The operation of float valve 26 can best be understood by reference to Figures 4 and 5. In Figure 4, the level of oil 18 is shown to be sufficiently high to lift the float element 27 above the reservoir end of main oil supply line 21. Hence, oil may flow through the supply line to the pump. In Figure 5, the oil level is shown to have fallen below the end of main oil supply line 21. Accordingly, the float element 27 now rests upon the end of the supply line 21 which functions as a valve seat, thereby closing off the reservoir end of line 21 to any flow. The continued operation of pump 12 at such time will cause a vacuum to build up inside main oil line 21. When the vacuum inside main oil line 21 reaches a predetermined value, the vacuum sensing switch 40, in fluid communication with main line 21, is actuated, and an alarm 42 is triggered.

The operation of the invention is similar if a restriction is developed in main oil supply line 21. Of course, minor restrictions which do not substantially interfere with the oil flow will not trigger the alarm 42. However, if a major restriction, such as clogging due to dirt or other foreign materal occurs, and the main oil supply line 22 comes under the unsafe, predetermined vacuum for operating switch 40, then the alarm 42 will likewise be triggered.

Those skilled in the art will appreciate that vacuum switch 40 could be used as a controller. For example, the switch 40 could be connected to motor 13 to turn the motor 13 off when there is insufficient oil. The switch 40 could also be used to open and close a valve that would supply up oil from a separate source (not shown). Hence, with the invention, it is possible to monitor the oil level and flow, to interrupt the operation pump if the flow fails, and to correct the failure by adding make up oil from an auxiliary source.

## Claims

1. An oil level and flow sensing apparatus comprising a reservoir (14) for holding oil (18) used for lubricating a vacuum pump (12), a vacuum pump (12) including an oil passage port through which the vacuum pump (12) draws or expels oil during operation, an oil supply line (21) having one end connected to the reservoir (14) and the other end connected to the oil passage port for carrying oil between the reservoir (14) and the vacuum pump (12) in either direction, at variable rates of flow and at variable levels of pressure during operation of the vacuum pump, characterised in that the reservoir (14) is normally maintained at atmospheric pressure and a float valve (26) is located in the reservoir (14) and includes a valve seat coupled to the reservoir end of the oil supply line (21) and a buoyant valve element (27) positionally dependent on the surface level of the oil (18) and for sealingly engaging the valve seat when the oil surface falls below a predetermined level whereby a vacuum is created in the oil supply line (21), and in that a vacuum sensor (40) is connected to said oil supply line (21), for sensing the presence of a predetermined vacuum in the oil supply line thereby indicating an insufficient oil flow for safe operation.

2. Apparatus according to claim 1, characterised in that oil pressure in said oil supply line (21) varies from at or above atmospheric pressure at the end connected to the reservoir (14) to a vacuum pressure at the other end connected to the oil passage port and in that said vacuum sensor (40) is connected to the oil supply line (21) near the reservoir end thereof for sensing the presence of a predetermined vacuum which is significantly less than the normal operating pressure at that location.

3. Apparatus according to claim 1 or claim 2, characterised in that a motor (13) is operatively connected to the pump (12) and is responsive to the vacuum sensor (40) for stopping operation where said vacuum sensor (40) senses the predetermined vacuum.

4. Apparatus according to any of claims 1 to 3, characterised in that an auxiliary source of oil is adapted to be placed in fluid communication with the vacuum pump oil reservoir (14), and a valve is provided for controlling the supply of fluid from the auxiliary source to the reservoir (14), said valve being responsive to said vacuum sensor (40) to supply fluid to the reservoir (14) when the vacuum sensor (40) senses said predetermined vacuum.

## Patentansprüche

1. Vorrichtung zum Erfassen eines Ölstandes und Ölstroms mit einem Behälter (14) zur Aufnahme von Öl (18), das zum Schmieren einer Vakuumpumpe (12) dient, einer Vakuumpumpe (12) mit einem Ölanschluß, über den die Vakuumpumpe (12) im Betrieb Öl ansaugt oder abgibt, und einer Ölzuleitung (21), die an ihrem einen Ende mit dem Behälter (14) und an ihrem anderen Ende mit dem Ölanschluß verbunden ist und während des Betriebes der Vakuumpumpe Öl zwischen dem Behälter (14) und der Vakuumpumpe (12) in der einen oder anderen Richtung in unterschiedlichen Mengen und mit unterschiedlichen Ölständen führt, dadurch gekennzeichnet, daß der Behälter (14) normalerweise unter atmosphärischem Druck gehalten wird und in dem Behälter (14) ein Schwimmerventil (26) angeordnet ist, das einen mit dem Behälterende der Ölzuleitung (21) gekuppelten Ventilsitz und ein schwimmfähiges Verschlußstück (27) aufweist, dessen Stellung von dem Niveau des Spiegels des Öls (18) abhängt und das sich dicht an den Ventilsitz anlegt, wenn der Ölstand unter einen vorherbestimmten Wert sinkt, so daß dann in der Ölzuleitung ein Vakuum erzeugt wird, dadurch gekennzeichnet, daß mit der Ölzuleitung (21) ein Vakuumsensor (40) verbunden ist, der auf ein vorherbestimmtes Vakuum in der Ölzuleitung (21) anspricht und dadurch einen für einen sicheren Betrieb ungenügenden Ölstrom anzeigt.

2. Vorrichtung nach Anspruch 1, dadurch gekennzeichnet, daß der Öldruck in der Ölzuleitung (21) von dem atmosphärischen oder einem höheren Druck an dem mit dem Behälter (14) verbundenen Ende zu einem Vakuum an dem mit dem Ölanschluß verbundenen, anderen Ende variiert und daß der Vakuumsensor (40) mit der Ölzuleitung (21) in der Nähe des Behälterendes derselben verbunden ist und auf einen vorherbestimmten Druck anspricht, der beträchtlich niedriger ist als der im Betrieb an dieser Stelle normalerweise vorhandene Druck.

3. Vorrichtung nach Anspruch 1 oder 2, dadurch gekennzeichnet, daß mit der Pumpe (12) ein Motor (13) in Wirkungsverbindung steht, der auf den Vakuumsensor (40) durch Unterbrechen des Betriebes anspricht, wenn der Vakuumsensor (40) das vorherbestimmte Vakuum erfaßt.

4. Vorrichtung nach einem der Ansprüche 1 bis 3, dadurch gekennzeichnet, daß eine Hilfsölquelle mit dem Ölbehälter (14) der Vakuumpumpe in Strömungsverbindung bringbar und daß zur Steuerung der Zufuhr von Fluid von der Hilfsquelle zu dem Behälter (14) ein Ventil vorgesehen ist, das auf den Vakuumsensor (40) anspricht und dem Behälter (14) Fluid zuführt, wenn der Vakuumsensor (40) das vorherbestimmte Vakuum erfaßt.

**Revendications**

1. Appareil détecteur de niveau et de débit d'huile comprenant un réservoir (14) pour contenir de l'huile (18) utilisée pour lubrifier une pompe à vide (12), une pompe à vide (12) comprenant une lumière pour le passage de l'huile, lumière à travers laquelle la pompe à huile (12) aspire ou expulse l'huile pendant son fonctionnement, une canalisation d'alimentation en huile (21) dont une extrémité est reliée au réservoir (14) et dont l'autre extrémité est reliée à la lumière de passage d'huile pour transporter l'huile dans les deux sens entre le réservoir (14) et la pompe à huile (12) selon des débits et des valeurs de pression variables pendant le fonctionnement de la pompe à vide, caractérisé par le fait que le réservoir (14) est normalement maintenu à la pression atmosphérique et qu'un clapet flottant (26) est monté dans le réservoir (14) et comprend un siège de clapet accouplé à l'extrémité du côté réservoir de la canalisation d'alimentation en huile (21) et un élément flottant de soupape (27) dont la position dépend du niveau de la surface de l'huile (18) de façon à entrer en prise de façon étanche avec le siège du clapet lorsque la surface de l'huile tombe au-dessous d'un niveau prédéterminé, créant ainsi le vide dans la canalisation d'alimentation en huile (21), et par le fait qu'un détecteur de vide (40) est relié à ladite canalisation d'alimentation en huile (21) pour détecter la présence d'un vide prédéterminé dans la canalisation d'alimentation en huile, indiquant ainsi une insuffisance de circulation d'huile pour assurer la sécurité de fonctionnement.

2. Appareil conforme à la revendication 1, caractérisé par le fait que la pression d'huile dans ladite canalisation d'alimentation en huile (21) varie depuis la pression atmosphérique, ou une pression supérieure à celle-ci, à l'extrémité reliée au réservoir (14), à une dépression à l'autre extrémité reliée à la lumière de passage de l'huile, et par le fait que ledit détecteur de vide (40) est relié à la canalisation d'alimentation en huile (21) près de l'extrémité du côté réservoir, afin de détecter la présence d'une pression prédéterminée qui soit notablement inférieur à la pression normale de fonctionnement à cet emplacement.

3. Appareil conforme aux revendications 1 ou 2, caractérisé par le fait qu'un moteur (13) est accouplé de façon opérante à la pompe (12) et réagit au détecteur de vide (40) pour arrêter le fonctionnement lorsque ledit détecteur de vide (40) détecte la valeur de vide prédéterminée.

4. Appareil conforme à l'une quelconque des revendications 1 à 3 caractérisé par le fait qu'une source auxiliaire d'huile est montée de façon à être placée en communication fluidique avec le réservoir d'huile (14) de la pompe à vide, et qu'un clapet est monté de façon à commander l'alimentation de fluide provenant de la source auxiliaire au réservoir (14), ledit clapet réagissant au signal fourni par le détecteur de vide (40) pour délivrer le fluide au réservoir (14) lorsque le détecteur de vide (40) détecte ladite valeur de vide prédéterminée.

Fig.1.

Fig.3.

Fig.4.

40 VACUUM
SWITCH

40 VACUUM
SWITCH

Fig. 3.

Fig. 2.